# EUROPEAN PATENT SPECIFICATION

(11) **EP 3 329 980 B1**
(45) Date of publication and mention of the grant of the patent: **10.07.2019**
(21) Application number: 17204700.3
(22) Date of filing: 30.11.2017
(51) Int. Cl.: B01D 46/00, B01D 46/10, B01D 46/52

(54) **FILTER WITH THERMAL EXPANSION COMPENSATOR**
FILTER MIT WÄRMEAUSDEHNUNGSKOMPENSATOR
FILTRE AVEC COMPENSATEUR DE DILATATION THERMIQUE

(30) Priority: 02.12.2016 IT 201600122425
(43) Date of publication of application: 06.06.2018
(73) Proprietor: Sagicofim SpA, 20121 Milano (IT)
(72) Inventor: MERICI, Giuseppe, 25080 MANERBA DEL GARDA BS (IT); ROSSI, Christian, 20025 LEGNANO MI (IT); SILVESTRO, Melania, 80021 AFRAGOLA NA (IT)
(74) Representative: Modiano, Micaela Nadia

(56) References cited:
- EP-A1- 2 865 436
- EP-A1- 3 065 846
- WO-A1-97/07871
- US-A1- 2008 236 121

## Description

The present invention relates to a filter, in particular a filter for abatement of particulate matter present in gaseous fluids.

Filters of such type are used, for example, in sterilizing machines, like hot air sterilizers or sterilization tunnels, such as those in use in the pharmaceutical sector.

Briefly, in such sterilizing machines, the material to be sterilized is engulfed by hot air (approximately at temperatures comprised between 200°C and 400°C).

The air, or more generally the gaseous fluid, must be filtered in order to prevent any particulate matter that may be present from contaminating the material undergoing sterilization.

To this end dedicated filters are used, and are usually placed along the path of the gaseous fluid (or air), for example at the dispensing vents or along the recirculation path of the fluid.

A conventional filter is usually made up of:
- a perimetric frame, typically metal or ceramic;
- a filtering pack, typically fiberglass;
- a sealant, typically ceramic or fiberglass;
- optionally, two protection nets.

Operation of sterilizing machines is not continuous, but is subject to startup/shutdown cycles which are interspersed with actual sterilization cycles; during such cycles the operating temperatures of the various components of the machine vary in intervals that can be quite wide, which cause thermal expansion in those components.

One component that is particularly subject to such expansion is, in fact, the filter; the various different parts that go to make up this component are in fact characterized by different thermal expansion coefficients, with the consequence that the repeated thermal cycles can entail the breakage of the filter; in particular the Applicant has observed that the thermal cycles often cause the breakage of the sealant or of the filtering medium and/or the formation of cracks or fissures that engender leak points.

Another limitation of conventional filters is linked to the fact that the speed of heating, in particular that of the filter, must not exceed a certain threshold, so as to reduce the aforementioned phenomena of breakage.

Another limitation of conventional filters is that maintenance interventions need to be quite frequent.

Another limitation is linked to the phase of testing the machine, in which the operating conditions (e.g. temperatures and thermal gradients that are created) are usually more stressful than those of actual use, with the consequence that a malfunction of the filter is more likely during such phase.

WO 97/07871 discloses a filter as defined in the preamble of claim 1.

The aim of the present invention consists in providing a filter that solves the above mentioned technical problems, eliminates the drawbacks and overcomes the limitations of the known art.

Within this aim, an object of the present invention is to provide a filter that is less subject to breakages derived from thermal expansion or cycles.

Another object of the invention consists in providing a filter that enables a reduction of the times for bringing into service or heating of the sterilizing machines on which it is applied.

A further object of the invention is to provide a filter that requires fewer maintenance and/or inspection interventions with respect to conventional filters.

Another object of the invention is to make available a filter that is less subject, with respect to conventional filters, to breakage during the testing phases of sterilizing machines.

Another object of the invention is to provide a filter that is relatively simple to provide and low cost.

A still further object of the invention consists of providing a filter that is capable of offering the widest guarantees of reliability and safety in use.

Another object of the invention consists in providing a filter that is easy to implement and economically competitive when compared to the known art.

This aim and these and other objects which will become better apparent hereinafter are achieved by a filter as defined in claim 1.

Further characteristics and advantages of the invention will become better apparent from the detailed description of a preferred, but not exclusive, embodiment of a filter, which is illustrated for the purposes of non-limiting example with the assistance of the accompanying drawings wherein:
Figure 1 is a perspective view of a preferred embodiment of a filter, according to the invention;
Figure 2 is a partially exploded perspective view of the filter in Fig. 1;
Figure 3 is a perspective view of a filtering pack of the filter in the previous figures;
Figure 4 is a perspective view of a frame of the filter in the previous figures;
Figures 5 and 6 are perspective views of two different perimeter walls of the frame of the filter in the previous figures;
Figures 7 and 8 are respectively a plan view and a perspective view of the perimetric wall in Fig. 5 in a step of assembly;
Figure 9 is a perspective view of the perimetric wall in Fig. 6 with a second type of thermal expansion compensator applied;
Figures 10 to 14 are perspective views of various moments of manufacturing the filter in the previous figures;
Figures 15 and 16 are cross-sectional views of the thermal expansion compensators of the filter in the previous figures.

The accompanying figures show an example of a filter according to the invention, generally designated with the reference numeral 1.

The filter 1 comprises a perimetric border frame 2, comprising a plurality of walls 21, 22, 23, 24 which delimit an accommodation region 25 in which a filtering pack 3, when mounted, is located.

In the example supplied, the shape in plan view of the frame 2 is substantially a square or a rectangle, therefore the side walls 21, 22, 23, 24 that delimit it are four walls in parallel and mutually opposite pairs.

Obviously, generally, there can be different shapes in plan view of the frame (with, consequently, a different number of walls).

The filtering pack 3 is accommodated in the accommodation region 25 and, in this example, has a shape substantially corresponding to that of the frame 2;

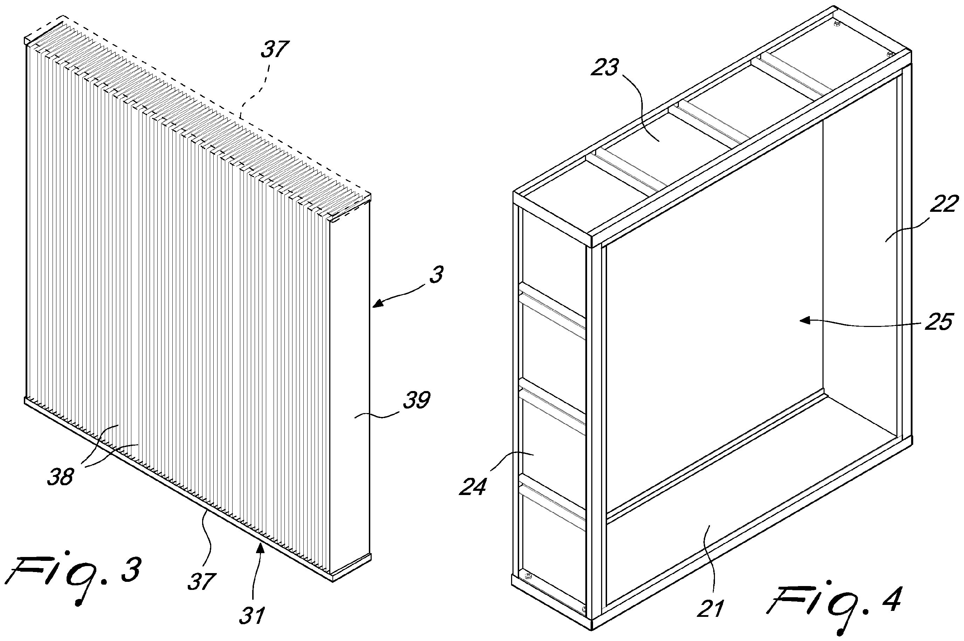

With reference to Fig. 3, the filtering pack 3 preferably comprises a pleated filtering medium which comprises a sheet of fiberglass paper 39 that is folded along folding or pleating lines 38 that are substantially mutually parallel, so as to be able to have a greater filtering surface for the same area occupied by the pack 3, as is known in general in the sector of filters.

Optionally, between folds of the pleated sheet 38, there are separator elements (not shown), which are made for example with a band of filtering medium.

The fiberglass paper 39 preferably has the following characteristics:
- filtering medium made of glass microfiber with thickness of 0.4 mm, basis weight of approximately 80 g/m², 5% binders.

The sheet of fiberglass paper 39 is preferably edged by applying two flat sheets 37 of filtering medium at the pleated end faces of the pack 3, as shown in Fig. 3, in which the upper flat sheet (in the figure) 37 is shown with a dotted line and transparent.

The application of the flat sheets 37 to the pleated end faces 31 of the pack 3 occurs preferably by way of adhesive bonding with a liquid sealant, a volatile component of which evaporates in a drying time interval, thus allowing the adhesion between the parts.

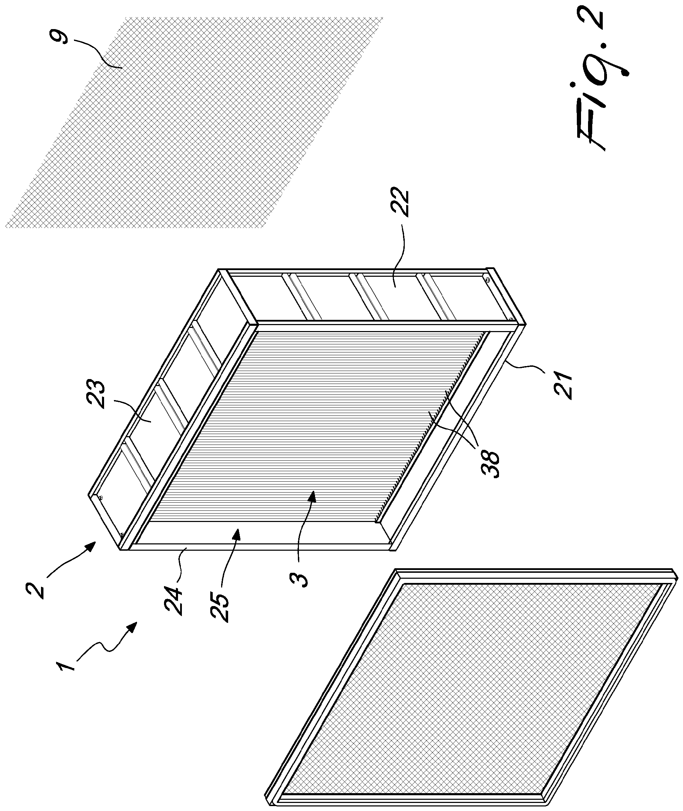

As can be seen in Fig. 2, the folding or pleating lines 38 are normal to at least one first wall 21 of the frame 2, and, in the example shown, also to a second wall 23 which is parallel to the first; the flat sheets 37 are thus parallel to such walls 21 and 23.

Turning now to a more detailed description of the frame 2, in the preferred and illustrated embodiment this comprises, in addition to the first and second wall 21, 23 (which are also known, in the technical sector, as "trays"), the two walls that are perpendicular thereto 22 and 24 (which are also known, in the technical sector, as "plates").

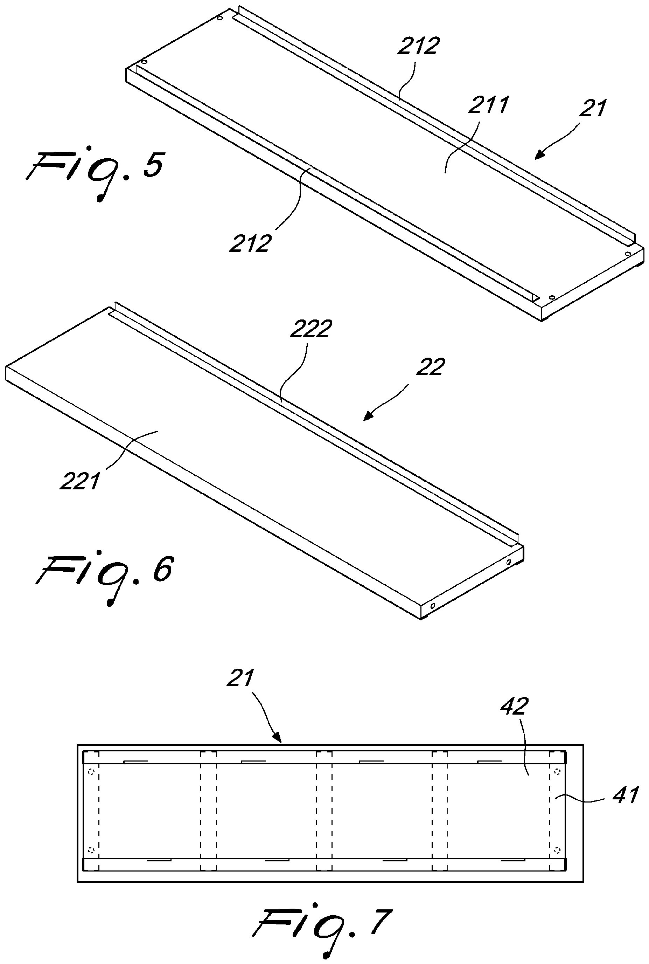

A detail of the trays 21 and 23 can be seen in Fig. 5, while the plates 22 and 24 are shown in Fig. 6.

The walls 21-24 are mutually connected, so as to form the frame 2, by way of mechanical coupling, for example with bolts or screw connections.

The walls 21 and 23, shown in Fig. 5, comprise a substantially rectangular plate-like body 211 on which is provided or applied a pair of ribs 212 that extend on the two longer sides and protrude from the surface of the plate-like body 211, so as to extend, when the filter 1 is assembled, toward the filtering pack 3 and keep it in position.

The walls 22 and 24, on the other hand, shown in Fig. 6, comprise a substantially rectangular plate-like body 221 on which a rib 222 is provided or applied that extends on one of the two longer sides and protrudes from the surface of the plate-like body 221, so as to extend, when the filter 1 is assembled, toward the filtering pack 3 and keep it in position.

Preferably the walls 21-24 of the frame 2 are made of metal or ceramic.

Characteristically, according to the invention, the filter 1 comprises at least one thermal expansion compensator which is interposed between at least one of the walls 21, 23 of the frame 2 and the filtering pack 3.

Preferably the filter 1, in the example supplied, comprises thermal expansion compensators 4, 5 which are interposed between the walls 21, 22, 23, 24 of the frame 2 and the filtering pack 3.

In more detail, there are two different types of compensators: a first compensator 4 mounted either on the trays (walls 21, 23) and a second compensator 5 (to be considered optional) mounted on the plates (walls 22, 24); the compensators 4 or 5 are, when assembled, interposed between the respective perimetric wall 21, 22, 23, 24 and the filtering pack 3.

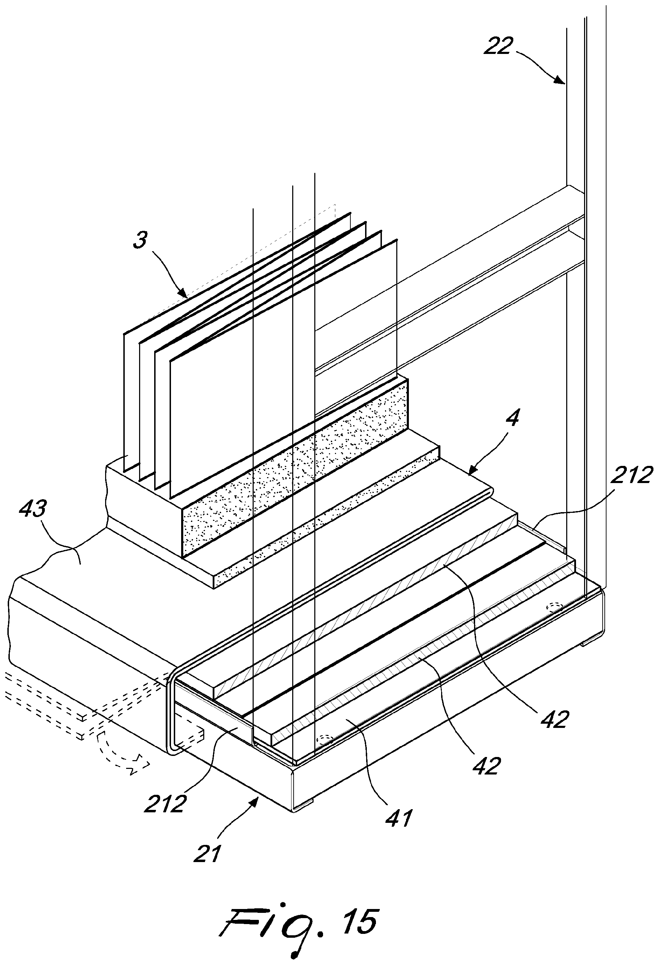

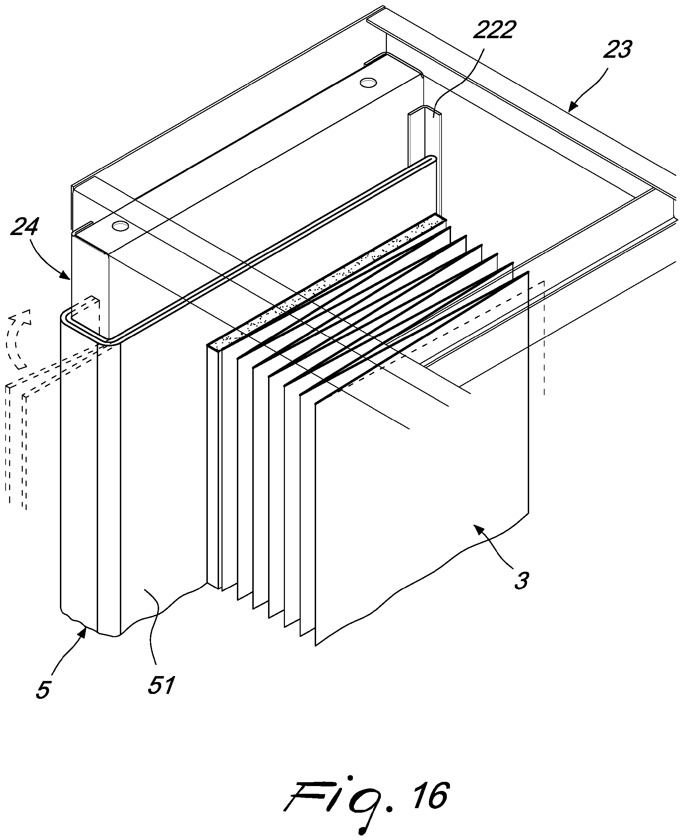

With reference to Fig. 15 and Fig. 16, both the first 4 and the second compensator 5 (if provided) comprise a sheet, respectively 43 and 51, of filtering medium that is similar (preferably substantially identical) to that of the pack 3; the sheet 43, 51 is folded onto itself and coupled both to the frame 2 and to the filtering pack 3, a free edge of the sheet 43, 51 being furthermore folded around a corresponding wall 21, 22, 23, 24 of the frame 2 coupled thereto, preferably by way of adhesive bonding.

The presence of the compensators 4 or 4 and 5, by virtue of the folded filtering sheet 43, 51 (which in the event of deformations acts like a bellows), allows the frame 2 and the filtering pack 3 to expand independently of each other, thus compensating any differences of elongation or contraction of the parts, and to prevent, in the final analysis, the problems present in filters in the state of the art and described above.

Descending into more detail, and with reference to Fig. 7 and Fig. 15, the first thermal expansion compensator 4 is at least interposed between a tray 21, 23 and a corresponding base 37 of the filtering pack 3; advantageously, as in the example shown, there are two first thermal expansion compensators 4, one for each tray 21, 23.

Such positioning is particularly useful because it makes it possible to compensate any contractions or elongations of the pack (as a consequence of cooling or heating) in the direction of the folding lines 38, in which such contractions/elongations are not compensated, even partially, by the pleating of the medium of the pack 3.

Starting from the surface of the tray 21, the first compensator 4 comprises, stratified, a first base sheet 41 arranged co-planar with the plate-like body 211 of the first wall 21; the first base sheet 41 is made of filtering medium, preferably the same as the pack 3, and is glued, for example by way of an adhesive sealant, onto the body 211 proper.

The first base sheet 41 has dimensions that are substantially such as to not extend, in plan view, outside the shape of the wall 21 and remain contained between the two ribs 212.

The compensator 4 also comprises, above the first base sheet 41, one or more filtering mats 42, which are glued to the base sheet 41.

In the embodiment shown there are two filtering mats 42.

The filtering mats 42 are made of compressed glass microfiber, preferably the same as the filtering pack glass 39, which is constituted by compressed sheets of 1 mm average filtering thickness.

The reason for the presence of the filtering mats, and preferably of a plurality thereof, is that it improves compensation of the expansions of the frame in the direction of the folds of the filtering pack: this direction in fact is the most critical, because the only mechanical tensile strength of the pack is that defined by the characteristics typical of the filtering medium, which, under certain conditions, may be insufficient to ensure the necessary compensation.

On the opposite side of the filtering mats 42, the compensator 4 then comprises a second base sheet 43 which has around double the extension with respect to the first base sheet 41 and is, when arranged in place, folded onto itself along the longer side, as shown in Fig. 15: at least one part of the second sheet 43 is glued to the underlying mat 42 (and therefore coupled indirectly to the frame 2), while the other part is coupled to the pack 3, preferably glued by way of an adhesive; the portion of the second sheet that extends outside the shape of the tray in plan view is folded around the wall 21 (on its long side) and glued thereto.

In this manner the filtering mat or mats 42 are interposed between the two base sheets 41, 43 in a sandwich-like fashion.

The adhesive has the function of a sealant, in order to prevent passages of unfiltered air that could compromise the operation of the filter 1.

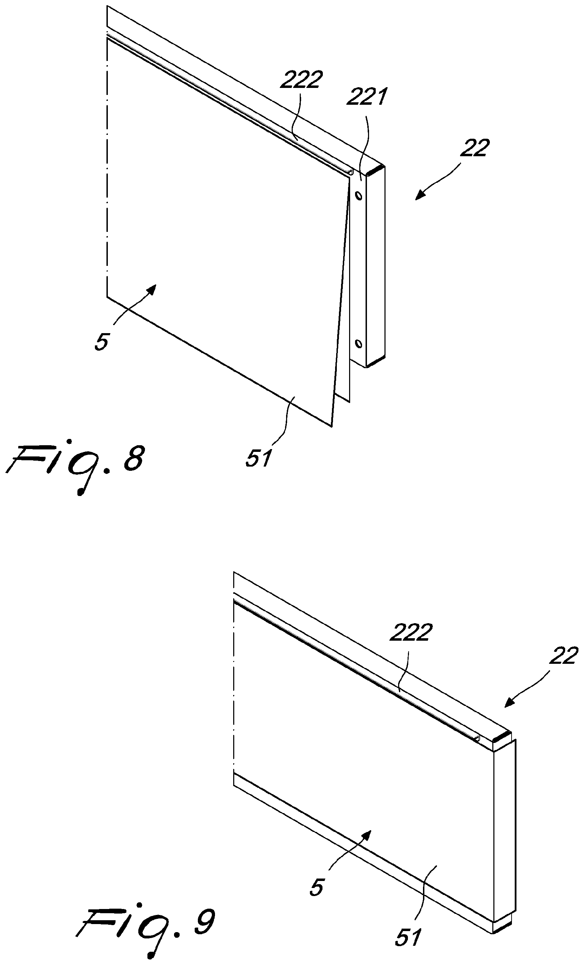

With reference to Figures 8, 9 and 16, the second compensators 5 are arranged between the plates 22 and 24 (perpendicular to the first and second wall of the frame 2) and the pack 3.

Note that, in principle, in place of two second compensators 5 there could be only one, or indeed none.

The second compensator (or compensators) 5 can be provided similarly to the first compensator 4; in this case the details are not entered into here and the reader is referred to the foregoing description.

In the embodiment shown, however, advantageously, the second compensator 5 is made simpler and cheaper, as shown in Figures 8, 9 and 16.

In this embodiment the second compensator 5 comprises the sheet 51 of filtering medium applied (preferably glued) directly to the wall 22, 24.

In this case too the adhesive performs a simultaneous sealant action, as with the compensator 4.

The sheet 51 of the second compensator 5 is arranged co-planar with the plate-like body 221 of the wall 22 and is made of filtering medium, preferably the same as the pack 3.

The base sheet 51 of the second compensator 5 has more than double the extension with respect to that of the plate-like body 221 and is, when arranged in place, folded onto itself along the longer side, in such a way that its folding line is adjacent to the rib 222; in this manner, one part of that sheet 51 is glued to the body 221, while the remaining part is glued to the filtering pack 3 and then folded around the wall 22 and glued thereto as in Fig. 16.

In the preferred and illustrated embodiment, therefore, there is a first pair of first compensators 4 and a pair of second compensators 5; each compensator 4 or 5 of the same pair is coupled to a wall 21, 22, 23, 24 of the frame that faces the wall to which the other compensator 4 or 5 of the same pair is coupled.

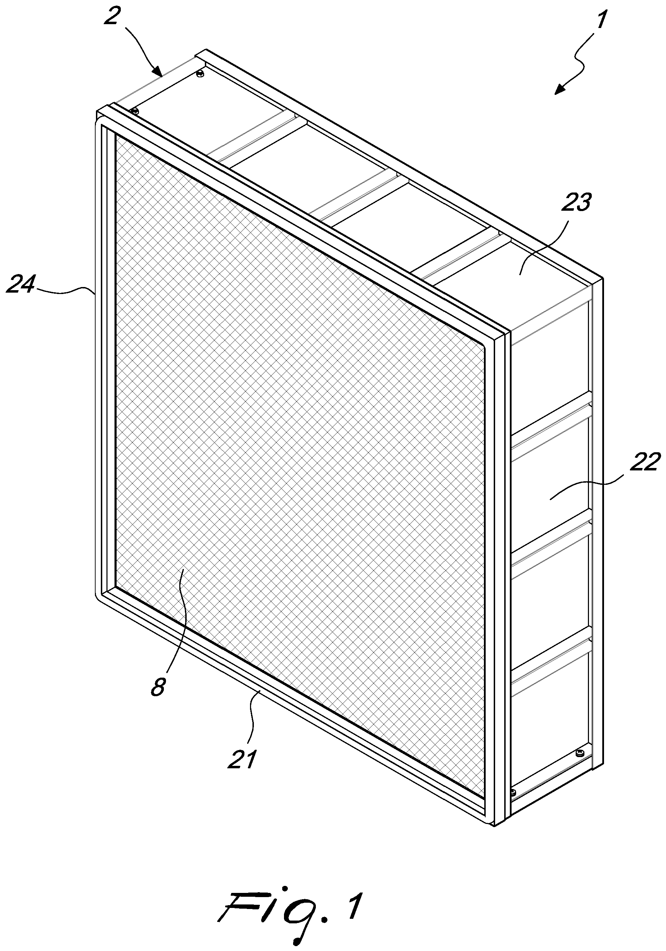

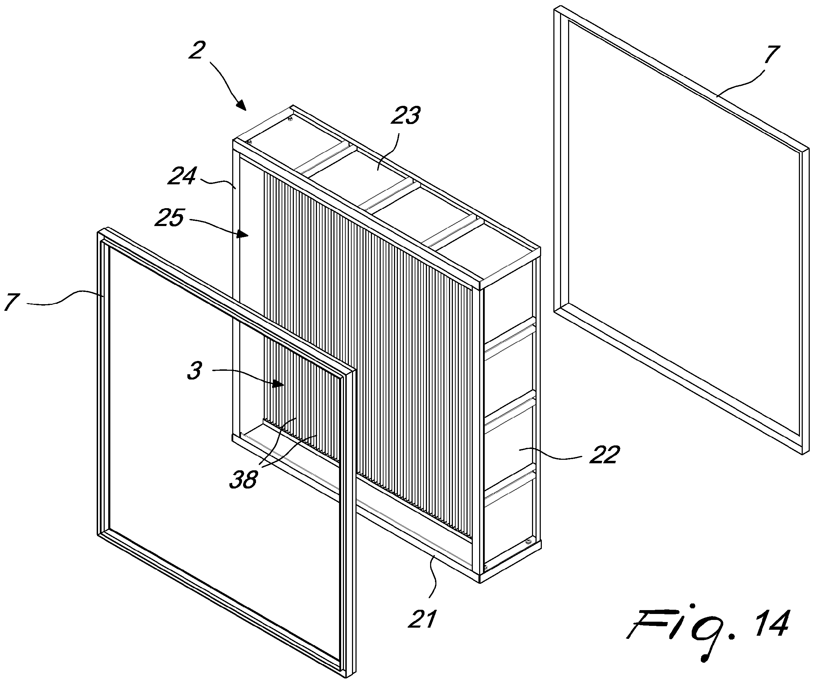

With reference to Fig. 1 and Fig. 14, note also that the filter 1 also optionally comprises two border frames 7 which are applied to the edges of the walls 21-24 of the frame 2 and preferably intended to fix the folded portion of the sheets 43, 51, as well as fixing one or two nets 8 for protecting the filter 1 proper.

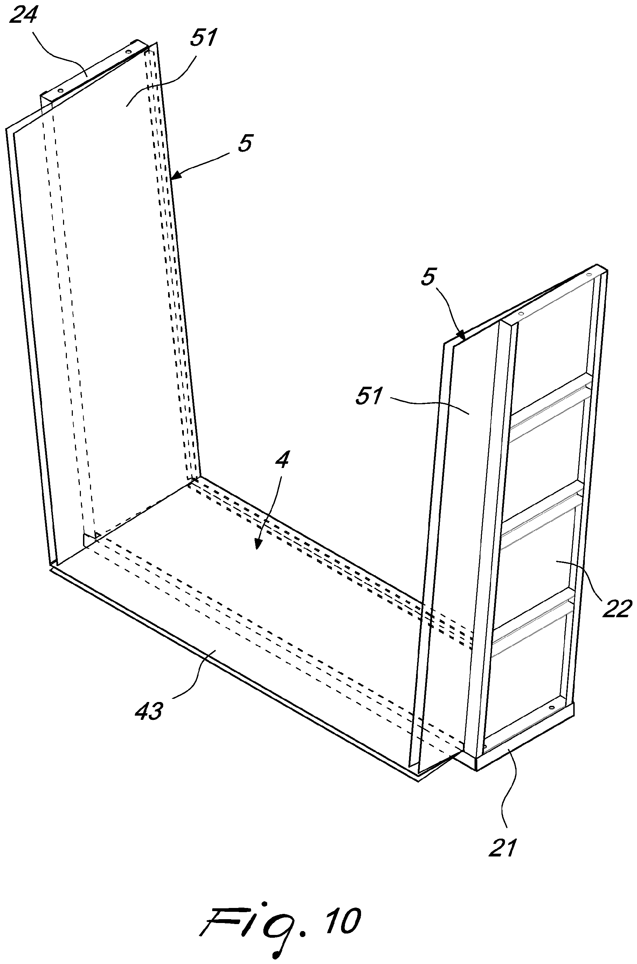

The method of assembly of the filter 1 is shown in consecutive steps in Figures 10-13.

First of all the first compensator 4 is mounted on the tray, taking care to let the sheet 43 extending beyond in one direction.

Then the plates 22, 24 fitted with the second compensator 5 are premounted on the tray 21, leaving the plates 22, 24 free to rotate for a certain angle with respect to the tray 21 and taking care to let the sheet 51 of each compensator 5 extend beyond on the same side (of the filter 1) as the sheet 43, thus obtaining a configuration like that in Fig. 10.

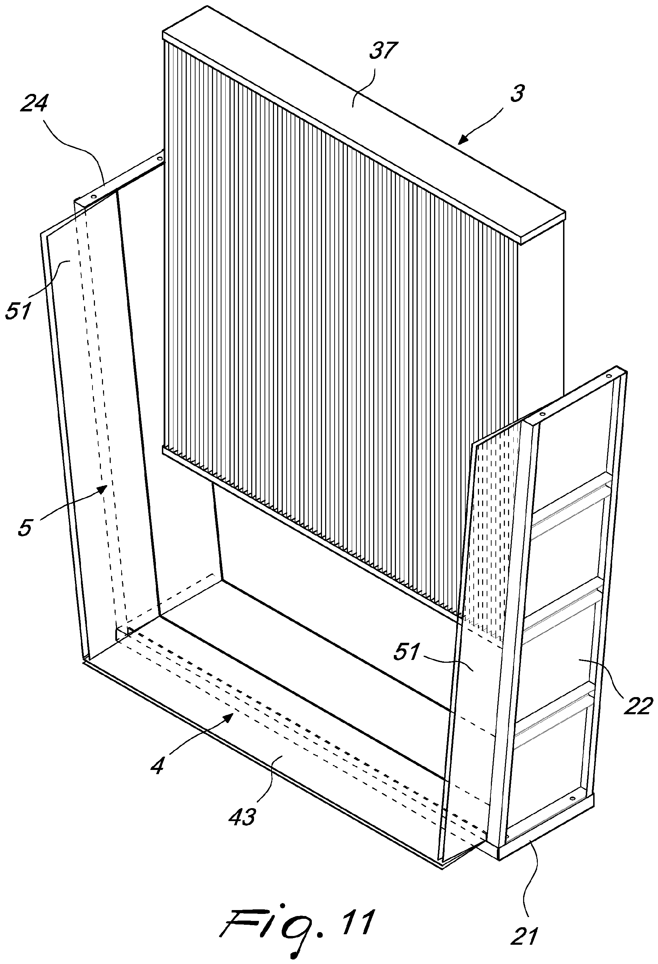

Then (Fig. 11) the filtering pack 3 is inserted, which takes advantage of the capacity for partial rotation of the plates 22, 24 for a better introduction.

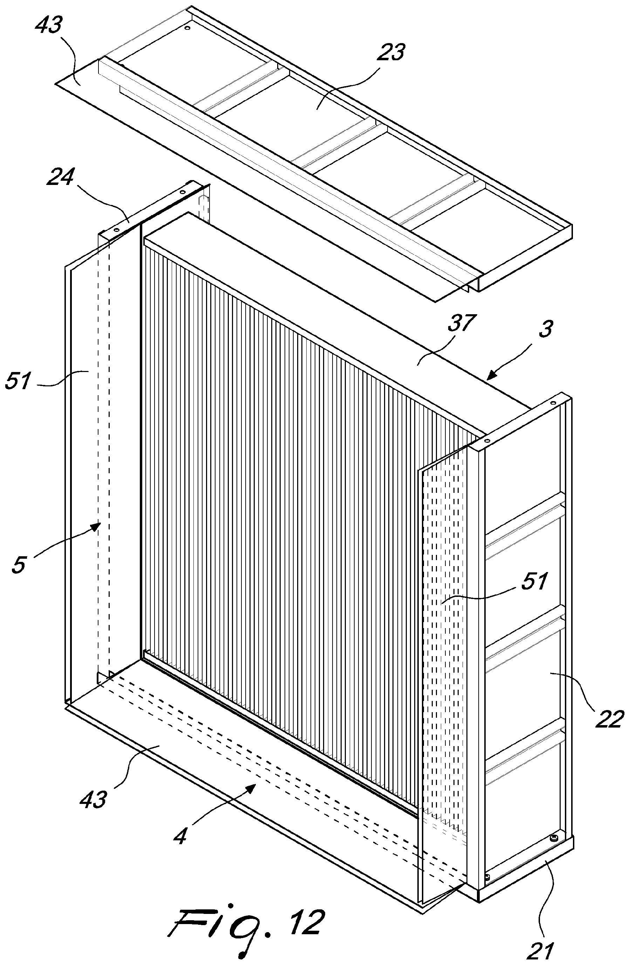

The plates 22, 24 are then joined and locked in position on the tray 21 and the tray 23, which is already fitted with the corresponding compensator 4, is mounted opposite (Fig. 12), here again taking care to let the sheet 43 extend beyond on the same side as the sheets 51.

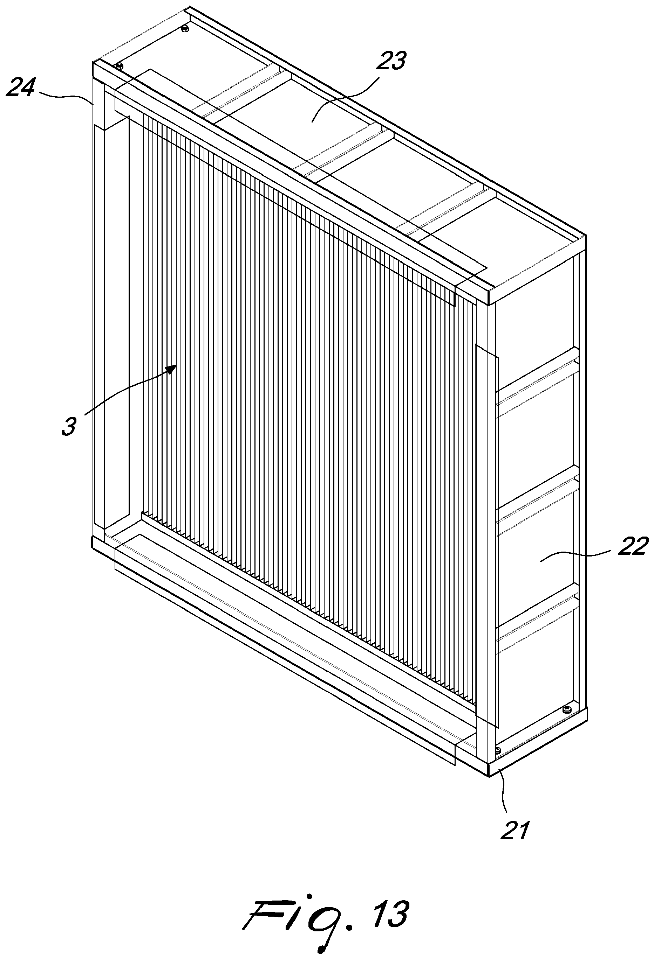

The protruding portions of the sheets 51 and 43 are then folded and glued to the corresponding walls of the frame 2 (Fig. 13), optionally with the aid of fixing brackets.

In practice it has been found that the filter according to the invention achieves the intended aim and objects in that it makes it possible to compensate differences in contraction/elongation of its parts, thus reducing the risk of breakage or malfunction and making it possible to undergo greater heating/cooling gradients than those currently usable for conventional filters.

In practice the materials employed, provided they are compatible with the specific use, and the contingent dimensions and shapes, may be any according to requirements and to the state of the art.

The filter, thus conceived, is susceptible of numerous modifications and variations, all of which are within the scope of the appended claims.

Moreover, all the details may be substituted by other, technically equivalent elements.

This application claims priority from Italian Patent Application No. 1 020 1 6000 1 22425.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A filter (1), comprising:
- a perimetric border frame (2), comprising a plurality of walls (21, 22, 23, 24) which delimit an accommodation region (25) for a filtering pack (3);
- a filtering pack (3) accommodated in said accommodation region (25) of the perimetric frame (2);
**characterized in that** the filter (1) comprises at least one thermal expansion compensator (4, 5) interposed between at least one of said walls (21, 22, 23, 24) of the frame (2) and the filtering pack (3), wherein said at least one thermal expansion compensator (4, 5) comprises a sheet (43, 51) of a filtering medium which is folded onto itself and is coupled to the frame (2) and to the filtering pack (3), a free edge of said sheet (43, 51) being furthermore folded around a corresponding wall (21, 22, 23, 24) of the frame (2) coupled thereto.

2. The filter (1) according to claim 1 , wherein the filtering pack (3) comprises a pleated filtering medium which comprises a sheet of fiberglass paper (39) that is folded along folding or pleating lines (38) that are mutually parallel, and wherein the folding lines (38) are normal to at least one first wall or tray (21) of the frame (2), said at least one thermal expansion compensator (4) being a first thermal expansion compensator (4) interposed between the first wall (21) and the filtering pack (3).

3. The filter (1) according to claim 2, wherein the first thermal expansion compensator (4) comprises:
- a first base sheet (41) of a filtering medium which is arranged so as to be coplanar with the first wall (21), has dimensions that are equal to said first wall (21), and is fixed to said first wall (21);
- one or more filtering mats (42) coupled to the first base sheet (41);
- a second base sheet (43) of a filtering medium that is folded onto itself like a bellows, a portion of the second sheet (43) being glued to the mat (42), while the remaining portion of the second base sheet (43) is at least partly coupled to the pack (3) and is folded around the first wall (21) and fixed thereto, preferably by adhesive bonding.

4. The filter (1) according to claim 1, **characterized in that** it further comprises at least one second thermal expansion compensator (5) interposed between walls (22, 24) of the frame (2) which are perpendicular to said first or second wall (21, 22) and a corresponding adjacent lateral edge of the filtering pack (3).

5. The filter (1) according to claim 4, **characterized in that** the second thermal expansion compensator (4) consists of a sheet (51) of filtering medium which is folded onto itself like a bellows, a portion of said sheet (51) being glued to the adjacent wall (22, 24), while the remaining portion is at least partly coupled to the pack (3) and folded around said wall (22, 24) and fixed thereto, preferably by adhesive bonding.

6. The filter (1) according to one or more of the preceding claims, **characterized in that** the frame (2) comprises four walls (21, 22, 23, 24) and a first pair of first compensators (4) and a pair of second compensators (5), each compensator (4, 5) of the same pair being coupled to a wall (21, 22, 23, 24) of the frame that faces the wall to which the other compensator (4, 5) of the same pair is coupled.

## Patentansprüche

1. Ein Filter (1), der Folgendes umfasst:
- einen perimetrischen Begrenzungsrahmen (2), welcher eine Vielzahl von Wänden (21, 22, 23, 24) umfasst, die einen Aufnahmebereich (25) für eine Filterpackung (3) begrenzen;
- eine Filterpackung (3), untergebracht in dem Aufnahmebereich (25) des perimetrischen Rahmens (2);
**dadurch gekennzeichnet, dass** der Filter (1) mindestens einen Wärmeausdehnungskompensator (4, 5) umfasst, angeordnet zwischen mindestens einer der Wände (21, 22, 23, 24) des Rahmens (2) und der Filterpackung (3); wobei der mindestens eine Wärmeausdehnungskompensator (4, 5) eine Schicht (43, 51) eines Filtermediums umfasst, die umgeknickt und mit dem Rahmen (2) und der Filterpackung (3) verbunden ist; wobei außerdem eine freie Kante der Schicht (43, 51) um eine entsprechende Wand (21, 22, 23, 24) des damit verbundenen Rahmens (2) gefaltet ist.

2. Der Filter (1) gemäß Anspruch 1, wobei die Filterpackung (3) ein gefaltetes Filtermedium umfasst, das eine Schicht Glasfaserpapier (39) umfasst, welche entlang Falt- oder Falzlinien (38) gefaltet ist, die zueinander parallel sind, und wobei die Falzlinien (38) senkrecht zu mindestens einer ersten Wand oder Wanne (21) des Rahmens (2) sind; wobei der mindestens eine Wärmeausdehnungskompensator (4) ein erster Wärmeausdehnungskompensator (4) ist, angeordnet zwischen der ersten Wand (21) und der Filterpackung (3).

3. Der Filter (1) gemäß Anspruch 2, wobei der erste Wärmeausdehnungskompensator (4) Folgendes umfasst:
- eine erste Grundschicht (41) eines Filtermediums, die so angeordnet ist, dass sie koplanar mit der ersten Wand (21) ist, Maße gleich denjenigen der ersten Wand (21) hat und an der ersten Wand (21) befestigt ist;
- eine oder mehrere Filtermatten (42), gekoppelt mit der ersten Grundschicht (41);
- eine zweite Grundschicht (43) eines Filtermediums, die zusammengefaltet ist wie ein Blasebalg, wobei ein Teil der zweiten Schicht (43) mit der Matte (42) verklebt ist, während der restliche Teil der zweiten Grundschicht (43) zumindest teilweise mit der Packung (3) gekoppelt und um die erste Wand (21) herum gefaltet und daran befestigt ist, vorzugsweise durch Verkleben.

4. Der Filter (1) gemäß Anspruch 1, **dadurch gekennzeichnet, dass** er weiter mindestens einen zweiten Wärmeausdehnungskompensator (5) umfasst, angeordnet zwischen Wänden (22, 24) des Rahmens (2), die senkrecht zu der ersten oder zweiten Wand (21, 22) und einer entsprechenden benachbarten Seitenkante der Filterpackung (3) sind.

5. Der Filter (1) gemäß Anspruch 4, **dadurch gekennzeichnet, dass** der zweite Wärmeausdehnungskompensator (4) aus einer Schicht (51) Filtermedium besteht, die zusammengefaltet ist wie ein Blasebalg, wobei ein Teil der Schicht (51) mit der benachbarten Wand (22, 24) verklebt ist, während der restliche Teil zumindest teilweise mit der Packung (3) verbunden und um die Wand (22, 24) gefaltet und daran befestigt ist, vorzugsweise durch Verkleben.

6. Der Filter (1) gemäß einem oder mehreren der obigen Ansprüche, **dadurch gekennzeichnet, dass** der Rahmen (2) vier Wände (21, 22, 23, 24) und ein erstes Paar erster Kompensatoren (4) und ein Paar zweiter Kompensatoren (5) umfasst, wobei jeder Kompensator (4, 5) desselben Paares mit einer Wand (21, 22, 23, 24) des Rahmens verbunden ist, die der Wand zugewandt ist, mit welcher der andere Kompensator (4, 5) desselben Paares verbunden ist.

## Revendications

1. Filtre (1) comportant :
- un cadre de bordure périmétrique (2), comportant une pluralité de parois (21, 22, 23, 24) qui délimitent une zone de réception (25) pour un ensemble filtrant (3),
- un ensemble filtrant (3) reçu dans ladite zone de réception (25) du cadre périmétrique (2),
**caractérisé en ce que** le filtre (1) comporte au moins un compensateur de dilatation thermique (4, 5) intercalé entre au moins une desdites parois (21, 22, 23, 24) du cadre (2) et l'ensemble filtrant (3), dans lequel ledit au moins un compensateur de dilatation thermique (4, 5) comporte une feuille (43, 51) d'un milieu filtrant qui est pliée sur elle-même et couplée au cadre (2) et à l'ensemble filtrant (3), un bord libre de ladite feuille (43, 51) étant de plus plié autour d'une paroi (21, 22, 23, 24) correspondante du cadre (2) couplé à celle-ci.

2. Filtre (1) selon la revendication 1, dans lequel l'ensemble filtrant (3) comporte un milieu filtrant plissé qui comporte une feuille de papier en fibre de verre (39) qui est pliée le long de lignes de pliage ou de plissage (38) qui sont mutuellement parallèles, et dans lequel les lignes de pliage (38) sont normales à au moins une première paroi ou un premier plateau (21) du cadre (2), ledit au moins un compensateur de dilatation thermique (4) étant un premier compensateur de dilatation thermique (4) intercalé entre la première paroi (21) et l'ensemble filtrant (3).

3. Filtre (1) selon la revendication 2, dans lequel le premier compensateur de dilatation thermique (4) comporte :
- une première feuille de base (41) constituée d'un milieu filtrant qui est agencée de manière à être coplanaire à la première paroi (21), a des dimensions qui sont égales à ladite première paroi (21) et est fixée à ladite première paroi (21),
- un ou plusieurs mats filtrants (42) couplés à la première feuille de base (41),
- une seconde feuille de base (43) constituée d'un milieu filtrant qui est pliée sur elle-même comme un soufflet, une partie de la seconde feuille (43) étant collée au mat (42), alors que la partie restante de la seconde feuille de base (43) est au moins partiellement couplée à l'ensemble (3) et est pliée autour de la première paroi (21) et fixée à celle-ci, de préférence par liaison adhésive.

4. Filtre (1) selon la revendication 1, **caractérisé en ce qu'**il comporte en outre au moins un second compensateur de dilatation thermique (5) intercalé entre des parois (22, 24) du cadre (2) qui sont perpendiculaires à ladite première ou seconde paroi (21, 22) et un bord latéral adjacent correspondant de l'ensemble filtrant (3).

5. Filtre (1) selon la revendication 4, **caractérisé en ce que** le second compensateur de dilatation thermique (4) est constitué d'une feuille (51) de milieu filtrant qui est pliée sur elle-même comme un soufflet, une partie de ladite feuille (51) étant collée à la paroi adjacente (22, 24), alors que la partie restante est au moins partiellement couplée à l'ensemble (3) et pliée autour de ladite paroi (22, 24) et fixée à celle-ci, de préférence par liaison adhésive.

6. Filtre (1) selon une ou plusieurs des revendications précédentes, **caractérisée en ce que** le cadre (2) comporte quatre parois (21, 22, 23, 24) et une première paire de premiers compensateurs (4) et une paire de seconds compensateurs (5), chaque compensateur (4, 5) de la même paire étant couplé à une paroi (21, 22, 23, 24) du cadre qui est dirigée vers la paroi à laquelle est couplé l'autre compensateur (4, 5) de la même paire.
